# EUROPEAN PATENT SPECIFICATION

(11) **EP 2 859 673 B1**
(45) Date of publication and mention of the grant of the patent: **05.06.2019**
(21) Application number: 12726454.7
(22) Date of filing: 11.06.2012
(51) Int. Cl.: H04L 12/717, H04J 14/02, H04L 29/06

(54) **USING SECURITY LEVELS IN OPTICAL NETWORK**
VERWENDUNG VON SICHERHEITSEBENEN IN EINEM OPTISCHEN NETZWERK
UTILISATION DE NIVEAUX DE SÉCURITÉ DANS UN RÉSEAU OPTIQUE

(43) Date of publication of application: 15.04.2015
(73) Proprietor: Telefonaktiebolaget LM Ericsson (publ), 164 83 Stockholm (SE)
(72) Inventor: MAGRI, Roberto, I-43100 Parma (IT); BOTTARI, Giulio, I-57123 Livorno (IT)
(74) Representative: Brann AB
(86) International application number: PCT/EP2012/060995
(87) International publication number: WO 2013/185796

(56) References cited:
- US-B1- 7 984 294
- AUDOUIN O ET AL: "Service level agreement and provisioning in optical networks", IEEE COMMUNICATIONS MAGAZINE, IEEE SERVICE CENTER, PISCATAWAY, US, vol. 42, no. 1, 1 January 2004 (2004-01-01), pages 36-43, XP011105972, ISSN: 0163-6804
- SARADHI C V ET AL: "Physical layer impairment aware routing (PLIAR) in WDM optical networks: issues and challenges", IEEE COMMUNICATIONS SURVEYS, IEEE, NEW YORK, NY, US, vol. 11, no. 4, 1 October 2009 (2009-10-01), pages 109-130, XP011285646, ISSN: 1553-877X, DOI: 10.1109/SURV.2009.090407
- FURDEK M ET AL: "Physical-layer attacks in all-optical WDM networks", MIPRO, 2011 PROCEEDINGS OF THE 34TH INTERNATIONAL CONVENTION, IEEE, 23 May 2011 (2011-05-23), pages 446-451, XP031904313, ISBN: 978-1-4577-0996-8

## Description

### TECHNICAL FIELD

This invention relates to methods of path computation through nodes of a communications network, to methods of validating a chosen path meets a desired security level, to methods of reporting a current security level at a node to a record at a centralised location, to nodes of a communication network configured to carry out such methods or to cooperate with a remote path computation element to validate a chosen path, and to signals having an indication of a security level of an optical path from an ingress node to an egress node in an optical communications network.

### BACKGROUND

As the demand for network capacity grows, the issue of securing the physical layer of optical network cannot be overlooked. Optical layer security benefits from electromagnetic immunity however the optical layer includes not only fiber spans but also network equipments which are vulnerable to a variety of attacks. This means that optical networks can be almost as easy to tap or to interfere as copper wire based networks.

One approach that has been proposed for providing communications security is optical encryption of the signals transmitted across an optical communications network, as proposed by Jung et al, "Demonstration of 10Gbps all-optical encryption and decryption system utilizing SOA XOR logic gates", Optical and Quantum Electronics, vol. 40, no. 5-6, April 2008. A problem faced by optical encryption is that optical encryption and decryption devices are required for each wavelength channel at each transmitter and receiver within a communications network, raising the cost of the network.

AUDOUIN O ET AL: "Service level agreement and provisioning in optical networks", IEEE COMMUNICATIONS MAGAZINE, IEEE SERVICE CENTER, PISCATAWAY, US, vol. 42, no. 1, 1 January 2004 (2004-01-01), pages 36-43, XP011105972, ISSN: 0163-6804 describes a service level agreement applied to the optical domain (O-SLA). Parameters that could be included in this O-SLA, as well as their values for four classes of services, arc proposed. Different client (wavelength or subwavelength) and service types (from leased wavelength to bandwidth on demand) are distinguished when necessary.

One known approach shown in WO2011103930 is concerned with the vulnerability of optical monitoring points in the communications network. These monitoring points are intended for monitoring optical spectrum and power but may be vulnerable to unauthorised eavesdropping. They typically comprise an optical splitter arranged to extract between 1% and 10% of the optical signal that is to be monitored, the extracted signal being provided to a monitoring port. All of the traffic carried by the optical signal being monitored is replicated in the extracted signal and is provided to the monitoring port. There is a resulting problem that live traffic is vulnerable to eavesdropping at the monitoring port and this presents a problem of communications network security.

International Telecommunications Union document ITU-T X.805 "Security architecture for systems providing end-to-end communications" sets out various optical protection schemes for making an optical connection secure against a fibre being cut to place an in-line tap for eavesdropping. However, the methods set out in ITU-T X.805 only monitor cuts in an optical communications network fibre link and are not able to detect eavesdropping of an optical signal via a monitoring port.

Optical signal transforming apparatus is arranged to receive the tapped signal and to apply an optical transfer function to the tapped signal to form an optical monitoring signal. The optical transfer function is arranged to preserve the spectral property of the tapped signal and to apply a time-domain obfuscation to the tapped signal. The optical signal transforming apparatus is further arranged to provide the optical monitoring signal to the monitoring port. Thus an optical monitoring signal from an input optical signal or an output optical signal may be formed on which the traffic is obfuscated in the time-domain and in which a spectral property of the input optical signal or the output optical signal is preserved. Therefore it becomes difficult or impossible for traffic on the input signal or the output signal to be intercepted by eavesdropping on the optical monitoring signal, without the need for encryption of each wavelength channel.

### SUMMARY

A first aspect of the invention provides a method of path computation through nodes of an optical communications network. A second aspect of the invention provides a method of validating a chosen path through nodes of an optical communications network. A third aspect of the invention provides a method of reporting a current security level at a node to a record of a connectivity of nodes and links of an optical communications network. A fourth aspect of the invention provides apparatus configured to carry out the method of the first or third aspects. A fifth aspect provides a node of an optical communications network configured to cooperate with a remote path computation element. A sixth aspect provides a signal having an indication of a security level of an optical path. The invention in its first to sixth aspects is defined in the independent claims. Further embodiments are defined in the dependent claims.

### BRIEF DESCRIPTION OF THE DRAWINGS

Embodiments of the invention will be described, by way of example only, with reference to the accompanying drawings in which:
Figure 1 shows a schematic view of a number of nodes and links of a communications network, according to a first embodiment,
Figure 2 shows operational steps according to an embodiment,
Figure 3 shows steps similar to those of figure 2 according to another embodiment with current security level updates,
Figure 4 shows steps similar to those of figure 3 according to another embodiment with multiple security levels and current security level updates,
Figure 5 shows steps similar to those of figure 3 according to another embodiment with wavelength allocation,
Figure 6 shows steps similar to those of figure 2 according to another embodiment with validation of security level during path set up,
Figure 7 shows a schematic view of some parts for one possible implementation of a secure node of an optical network,
Figure 8 shows a schematic view of another embodiment in which the security monitoring system is applied to a ROADM node,
Figure 9 shows steps in validating a security level along a path during set up of the path according to an embodiment,
Figure 10 shows a sequence chart for a path set up procedure with comparison at an ingress node,
Figure 11 shows a sequence chart similar to that of figure 10 but for a path set up procedure with the comparison made at each node, and
Figure 12 shows steps in a method of updating the record of levels of security according to an embodiment.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes.

### Abbreviations:

- ASIC:: Application Specific Integrated Circuit
- AWG:: Array WaveGuide
- FPGA:: Field Programmable Gate Array
- HW:: Hardware
- LOS:: Loss of Signal
- LSP:: Label Switched Path
- MTP:: Multi-fiber Termination Push-on (type of connector)
- NMS:: Network Management System
- PCE:: Path Computation Element
- ROADM:: Reconfigurable Optical Add Drop Multiplexer
- WDM: Wavelength Division Multiplexing
- WSON: Wavelength Switched Optical Network
- WSS:: Wavelength Selective Switch

### Definitions:

Where the term "comprising" is used in the present description and claims, it does not exclude other elements or steps and should not be interpreted as being restricted to the means listed thereafter. Where an indefinite or definite article is used when referring to a singular noun e.g. "a" or "an", "the", this includes a plural of that noun unless something else is specifically stated.

Elements or parts of the described nodes or networks may comprise logic encoded in media for performing any kind of information processing. Logic may comprise software encoded in a disk or other computer-readable medium and/or instructions encoded in an application specific integrated circuit (ASIC), field programmable gate array (FPGA), or other processor or hardware.

References to nodes can encompass any kind of switching node, not limited to the types described, not limited to any level of integration, or size or bandwidth or bit rate and so on.

References to switches can encompass switches or switch matrices or cross connects of any type, whether or not the switch is capable of processing or dividing or combining the data being switched.

References to programs or software can encompass any type of programs in any language executable directly or indirectly on processing hardware.

References to processors, hardware, processing hardware or circuitry can encompass any kind of logic or analog circuitry, integrated to any degree, and not limited to general purpose processors, digital signal processors, ASICs, FPGAs, discrete components or logic and so on. References to a processor are intended to encompass implementations using multiple processors which may be integrated together, or co-located in the same node or distributed at different locations for example.

The functionality of circuits or circuitry described herein can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Embodiments can have programs in the form of machine-readable instructions (software) which, when executed by a processor, perform any of the described methods. The programs may be stored on an electronic memory device, hard disk, optical disk or other machine-readable storage medium or non-transitory medium. The programs can be downloaded to the storage medium via a network connection.

References to ports are intended to encompass any kind of port, examples include, and are not limited to, optical connectors for internal or external coupling, connectors for coupling between cards and motherboards, fiber tails with no termination, for future splicing, cards having such connectors or fibers and associated circuitry or components, ports provided for monitoring optical spectrum, or for future expansion or reconfiguration, or because the commercially available optical branching components do not provide the desired number of outputs, and so on.

References to access to a path are intended to encompass any kind of physical access which could affect signals on the path, for an optical path this can encompass connecting to an optical connector or splicing a fiber tail or tapping a proportion of the optical power, so that optical signals on the optical path can be received, or so that interfering optical signals can be added to the optical path.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

### Introduction

By way of introduction to features of embodiments of the invention, some discussion of known features will be presented. Today's ROADM architectures allow nodes with different functionalities such as the Colored/Colorless, Directionbound/Directionless, Contentionless, etc. All these architectures show a certain degree of vulnerability in terms of ease of access to optical unused ports where the optical signal carrying a large amount of traffic can be tapped or accessed and no means of detecting the malicious intrusion are available now.

Some of the vulnerable points of these architectures include:
- Line splitter unused output ports typical of broadcast & select structures
- Passive AWG ports at the drop side
- ADD channels splitter output ports in the directionless architecture
- Splitter output ports in the drop side of the colorless architectures with coherent transponders
- NxM ports in the contentionless architectures.
- Card monitoring ports (e.g. optical amplifier monitors)

Hence there are many unused ports, unprotected and accessible, available in the current and future node architectures for optical networks, and the current art does not recognise this problem. Reliance is placed on building or room or cabinet security measures. But many customer sites/buildings may not be sufficiently protected against intrusion or access to the equipment so additional means to prevent data access violation are desirable.

### Security measures for providing and indicating security levels

Where there are security measures to secure against unauthorised physical access to the paths of the network, it has now been recognised that network operation can be made dependent on these measures and on their current status, as will be explained with reference to a number of embodiments. The security measures can include changes to software/firmware for controlling the node, and/or to additional hardware for blocking unused ports. For example, for nodes of optical networks having multiple WSSs, each wavelength may be split and distributed to the WSSs, and blocked at all but one of the WSSs to control which direction the wavelength is output. Software/firmware is provided in charge of commanding each WSS to block or not block a specific channel, depending of the desired outbound port. Security measures can be provided to guard against altering or hacking of such software/firmware. The blocking capability of a WSS can be assured by a proper SW design where any change of status of a WSS port is not allowed if no traffic is configured for this port/channel and can be enforced by adapting the WSS control software/firmware to report any change of status so that repudiation of the action cannot be done.

Other security measures can involve using electro-mechanical methods or involve monitoring a blocking part used to occupy unused ports which would otherwise be vulnerable to eavesdropping. This can be based on a 'security guard unit' which enables a ROADM node to certify that a light-path crossing the node itself has not been spilled, tapped, dropped or interfered with in any way. Any points of 'weakness' and vulnerable points of access for a malicious operator can be monitored.

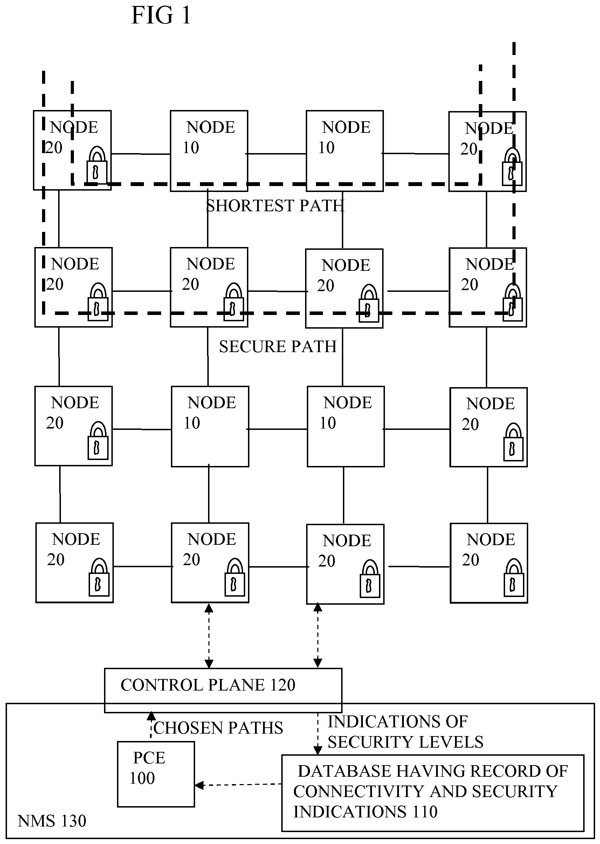

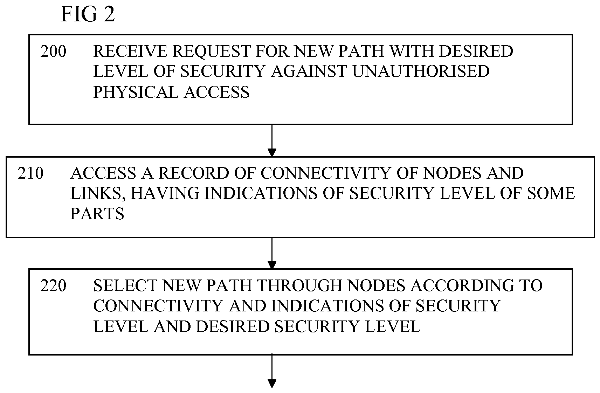

### Figs 1,2 a first embodiment of the invention

Figure 1 shows a schematic view of a number of nodes and links of a communications network, using optical or other technologies. Four rows of four nodes are shown, but in a typical network there may be many more and arranged in different types of topologies (e.g. rings, trees). The nodes are of two types, insecure nodes 10 and secure nodes 20. The insecure nodes either have no security capability, or have the capability but the monitored status of the security is that the security has been breached.

The nodes report their security capability or security status of the node or parts of the node or links, to a database 110 having a record of network connectivity and security indications. A path computation entity PCE 100 can calculate paths for new traffic requests or for on the fly recovery of traffic impacted by a failure, based on the security indications in the database. The PCE and record can be centralised or duplicated at a local level at each node following established principles. The PCE and record can be within or separate to a network management system NMS 130, and the NMS can be part of or integrated with a control plane 120. The NMS can be centralised or at least partly distributed amongst the nodes. The control plane 120 can provide the communications between the nodes and the PCE and record, or such communications can be provided separately.

The PCE can be implemented as a processor configured to execute programs in the form of software or firmware. It can be shared with other functions by time slicing, or be a dedicated processor for PCE for example. The dotted lines show two possible paths selected by the PCE for a traffic request between a top left node which can be regarded as an ingress node, and a top right node which can be regarded as an egress node. The upper of the two paths passes along the top row of nodes which is the shortest path, based on the connectivity in the record, regardless of the indications of security level. If the traffic request needs a particular level of security, then the path computation can be carried out using the indications of security level in the record. This might result in the PCE selecting the lower path as shown, which passes along a second row of nodes which is the shortest path using only nodes indicated as secure nodes 20, without using any of the nodes 10 indicated as insecure.

In principle the security of a link (fiber span) from eavesdropping need not be a concern in optical networks because it is intrinsically secure because it is usually not possible to "extract" optical signals from the link without cutting the fiber. If that happens, an alarm is always activated as the disruption in traffic is always detected. Nonetheless in some cases there may be links with fiber terminations for optical amplifiers or there may be electrical domain links which may be vulnerable to unauthorised physical access.

Figure 2 shows operational steps according to an embodiment. At step 200 a request for a new path with a desired level of security is received at the PCE, the security level indicating a level of protection against unauthorised physical access to the path. At step 210 the PCE accesses the record of connectivity of nodes and links, and indications of security. The indications can relate to nodes or parts of nodes or links, or to multiplex channels through multiple nodes for example. Where there is no security information for part of the node or link, the default assumption may be that the node or part has the lowest level, in other words it is insecure. At step 220, the PCE selects a new path for the traffic through the nodes from the ingress node to the egress node based on the connectivity and on the indications of security levels. If the indications are of security capability only, without current security status, then it would be possible to check the security status later, for example when communicating with the nodes to set up the path. This might enable the amount of data in the record to be reduced and the amount of communications overhead involved in maintaining the record to be reduced.

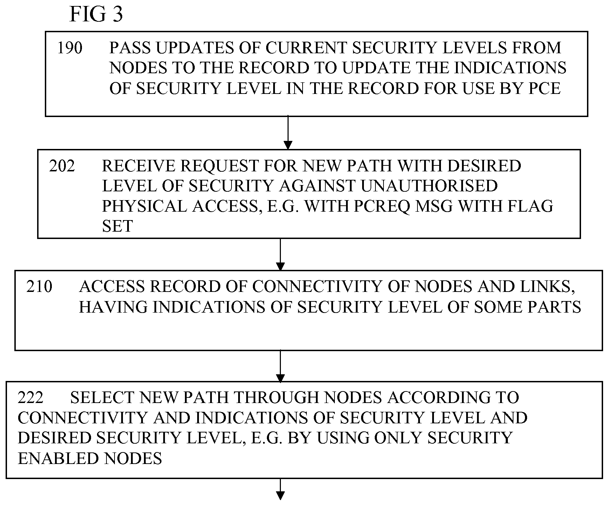

### Fig 3, steps according to another embodiment with current security level updates

Figure 3 shows steps similar to those of figure 2 according to another embodiment with current security level updates. At step 190 at least some of the nodes pass their current security level or levels to the record to update the indications of security level in the record for use by the PCE. This can happen for example when there is a change in level for any reason, such as an upgrade or a detection of tampering. Or it can happen periodically when the record polls the nodes for example. At step 202 a request for a new path with a desired level of security is received at the PCE, the security level indicating a level of protection against unauthorised physical access to the path. In some networks this can be implemented as a path computation request PCreq message with a flag set to indicate there is a desired security level. At step 210 the PCE accesses the record of connectivity of nodes and links, and indications of security. The indications can relate to nodes or parts of nodes or links, or to multiplex channels through multiple nodes for example. Where there is no security information for part of the node or link, the default assumption may be that the node or part has the lowest level, in other words it is insecure.

At step 222, the PCE selects a new path for the traffic through the nodes from the ingress node to the egress node based on the connectivity and on the indications of security levels, so as to use only security enabled nodes such as the nodes 20 of figure 1.

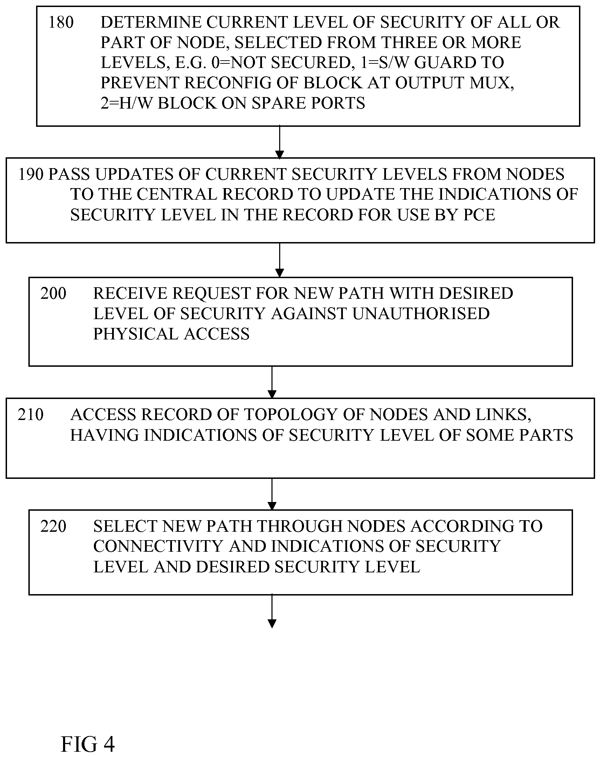

### Fig 4, another embodiment with multiple security levels and updates

Figure 4 shows steps similar to those of figure 3 according to another embodiment with multiple security levels and current security level updates. At step 180, some nodes or each node determines a current level of security for a part or for all of the node. The level can be selected from three or more levels, for example level 0 = not secured, level 1 = software guard to prevent hacking into switch control software, and level 2 = hardware blocking part on any or all unused ports. Other layers can be envisaged. At step 190 at least some of the nodes pass their current security level or levels to the record to update the indications of security level in the record for use by the PCE. This can happen for example when there is a change in level for any reason, such as an upgrade or a detection of tampering. Or it can happen periodically when the record polls the nodes for example. At step 200 a request for a new path with a desired level of security is received at the PCE, the security level indicating a level of protection against unauthorised physical access to the path. At step 215 the PCE accesses the record of connectivity of nodes and links, and indications of security. The indications can relate to nodes or parts of nodes or links, or to multiplex channels such as wavelengths of a wavelength multiplexed network.

At step 220, the PCE selects a new path for the traffic through the nodes from the ingress node to the egress node based on the connectivity and on the indications of security levels, and the desired security level, so as to use only security enabled nodes such as the nodes 20 of figure 1.

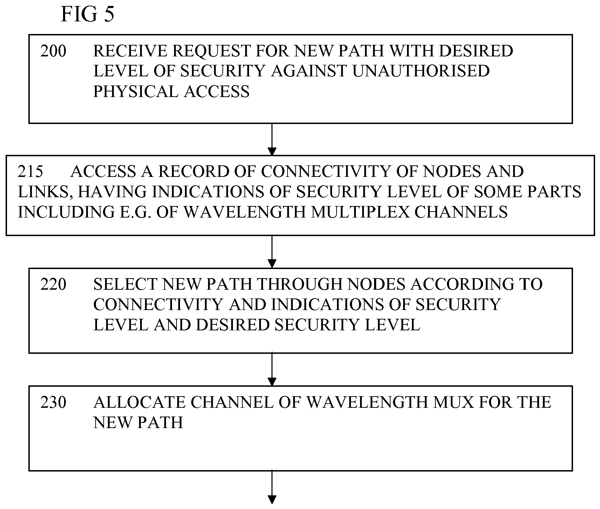

### Fig 5, embodiment with security indication of wavelengths and wavelength allocation

Figure 5 shows steps similar to those of figure 3 according to another embodiment with wavelength allocation. At step 200 a request for a new path with a desired level of security is received at the PCE, the security level indicating a level of protection against unauthorised physical access to the path. At step 215 the PCE accesses the record of connectivity of nodes and links, and indications of security. The indications can relate to nodes or parts of nodes or links, or to multiplex channels through multiple nodes for example. Where there is no security information for part of the node or link, the default assumption may be that the node or part has the lowest level, in other words it is insecure. At step 220, the PCE selects a new path for the traffic through the nodes from the ingress node to the egress node based on the connectivity and on the indications of security levels. At step 230, a channel allocation is made from available ones of the wavelength multiplexed channels. These can be wavelengths or bands in a flex grid type optical network for example.

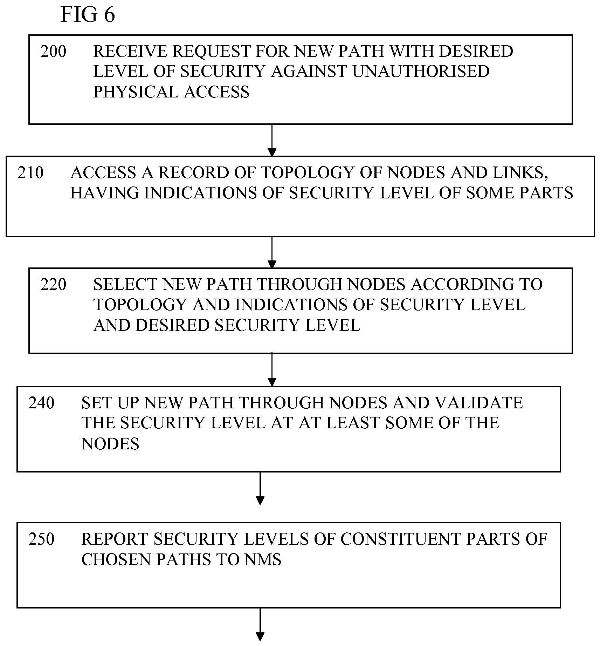

### Fig 6, embodiment with validation of security level during path set up

Figure 6 shows steps similar to those of figure 2 according to another embodiment with validation of security level during path set up. As in figure 2, at step 200 a request for a new path with a desired level of security is received at the PCE. At step 210 the PCE accesses the record of connectivity of nodes and links, and indications of security. The indications can relate to nodes or parts of nodes or links. At step 220, the PCE selects a new path for the traffic through the nodes from the ingress node to the egress node based on the connectivity and on the indications of security levels. At step 240 the selected path is set up through the nodes of the network. This can be controlled centrally by the NMS or locally the ingress node for example. During this set up process, a validation process can take place to check that the security level is still high enough to match the desired security level. This can involve comparing the desired level to the internal record at the node of its current security level. The comparison can take place at each node and the result be sent back to the ingress node, or the current security level can be sent from the node to the ingress node and the comparison can be done there. At step 250, the security levels of constituent parts of the chosen path can be reported to the NMS. This can be reports of changes in level, or periodic reports to reassure the NMS that the security monitoring and communication paths are still working.

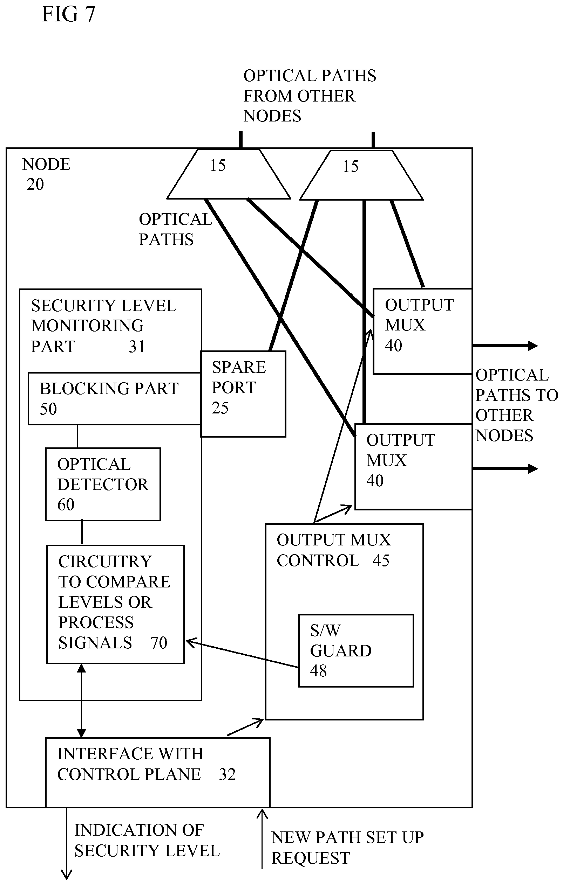

### Fig 7, secure node for use in embodiments

Figure 7 shows a schematic view of some parts for one possible implementation of a secure node 20 of an optical network, for use with the embodiments described. A security monitoring part 31 is provided. The node has an optical branching part 15 provided in the form of a splitter or demultiplexer for example, coupled to incoming optical paths. Outputs of the branching part are fed to other output ports or to output multiplexers 40 which can selectively block or pass wavelengths. One of these paths leads to an unused output port 25. The security level monitoring part has a blocking part 50 which occupies the unused port so as to prevent unauthorised access to the optical path of the unused port. An optical detector 60 is provided coupled to the blocking part and configured to detect optical signals passing through the unused port. This can be integrated in the blocking part, or provided with an optical path such as an optical fiber flying lead so that the optical detector can be some metres away from the port. The security monitoring part also has circuitry 70 coupled to the optical detector and configured to compare levels for validation of security levels or process signals to report changes in security level for example, or to output an alarm signal indicative that the unused port has been accessed based on the detecting of the optical signals by the optical detector, via an interface 32 with the control plane. A software guard 48 is also coupled to the circuitry 70. This software guard is part of a control part 45 for controlling the output multiplexers 40 to control which of the distributed optical signals are to be blocked and which are to be passed.

The circuitry can be implemented as a processor configured to execute programs in the form of software or firmware. It can be shared with other functions by time slicing, or be a dedicated processor for the security level monitoring part for example.

The proposed security monitoring part (which can be a card fitted into the main equipment, or an active frame housed in a pizza box likewise for example) can have optical detectors implemented as a set of photodiodes to be connected to blocking parts in the form of optical connectors for example to connect to the open unsecure ports of a ROADM node. Any opening of such connections for malicious purposes will be instantaneously detected, and an alarm signal can be sent to enable network operators to take opportune counter measures.

This method or apparatus can be applied to current equipment or installed legacy equipment since it can be based on a new add-on unit which does not require changes in the developed equipment cards. Furthermore the unit can be based on low cost devices and simple low speed electronics and control. This is pertinent to ITU-T X.805, addressing non repudiation and access control security dimensions, and the security management plane.

If the ROADM has the required security capability, the security monitoring part can communicate this information, for example indicating the security capability and its current status to the network control and management for any appropriate response, such as warning a human operator, or rerouting sensitive traffic, or updating a routing database for example.

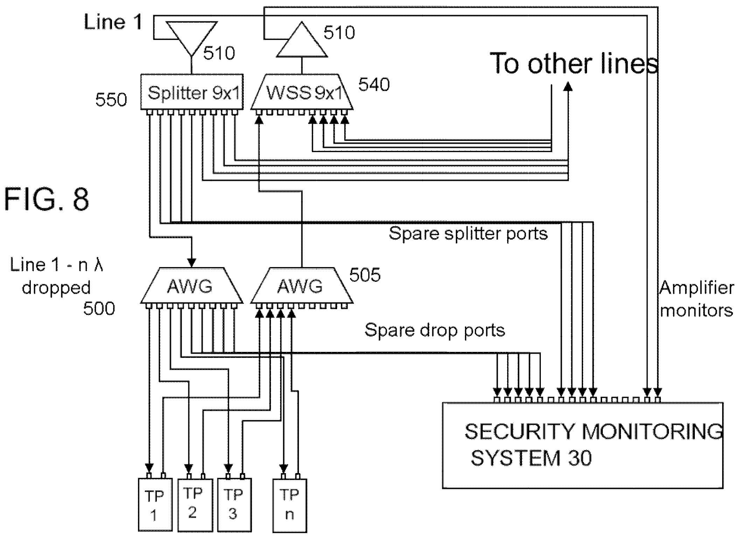

### Fig 8 embodiment in the form of a colored/directionbound ROADM node

Figure 8 shows a schematic view of parts of apparatus in the form of a node according to another embodiment in which the security monitoring system is applied to a traditional Colored/Directionbound ROADM node. One bidirectional optical link (line 1) is shown to and from another node, many other such lines may be provided. Optical amplifiers 510 are provided as input and output interfaces. Monitoring outputs of these amplifiers are fed to the security monitoring system. A splitter 550 splits the incoming optical signal which is typically a WDM signal into 9 identical copies (there may be more or fewer copies in other examples). One of the copies is fed to a drop demultiplexer AWG 500 which separates the n individual wavelengths of the WDM signals and couples each wavelength to a different transponder (TP 1...n) which then outputs an electrical signal to a local client interface. As the AWG may not have the "right" number of outputs to match the desired number of transponders, there may be a number of spare outputs which are unused ports. These are coupled to the security monitoring system so that they are occupied and not vulnerable to unauthorised, undetected eavesdropping.

The splitter has 8 other outputs as shown. Four of these are fed to other lines and so are "used". Another four are unused and so are fed to the security monitoring system so that they are occupied and not vulnerable to unauthorised, undetected eavesdropping. Hence the security monitoring system as shown occupies all the unused monitoring ports, unused splitter ports, and unused demultiplexer drop ports.

The transponders also have incoming signals which are for adding to the WDM signals sent to the other nodes. These are coupled as individual wavelengths from the transponders to AWG multiplexer 505. This AWG has a number of unused input ports. These are not shown as being occupied or monitored, but in another example, if there was any risk of these being used to insert unwanted interfering signals, the security monitoring system could occupy and monitor these input ports also. The WDM "add" signal from multiplexer 505 is fed to a WSS 540 which selects which wavelengths of the "add" signal are sent out on line 1 together with other wavelengths from other lines. The output WDM signal from WSS 540 is fed to an optical amplifier 510 for transmission to the next node. Parts 510, 550 and 540 can be provided for each of the lines served by the node.

If all the unused ports for a given incoming line are occupied and monitored, this can provide a security capability for that line even if other lines incoming to the same node do not have the same security. The security monitoring system can be arranged to indicate to the network management system which of the lines are secure.

Or, in another example, a subset of the wavelengths can be protected by occupying all the unused monitoring ports, all the unused splitter ports, but only selected ones of the drop ports corresponding to the subset of wavelengths. The security monitoring system can be arranged to indicate to the network management system which of the wavelengths are secure.

Or, if desired, all the unused ports of the entire node can be occupied and monitored by the security monitoring system. Other variations can be envisaged such as applying a similar security monitoring system to a more advanced colorless/directionless architecture of ROADM.

### Centralised PCE case for WSON network

In operation, in this type of network, an optical LSP is requested between a couple of nodes in a WSON network. A conventional routing procedure would find the shortest path, according to a given objective function. The proposed method forces the routing engine to find a route based on security information, for example using only security enabled nodes, or prioritising such nodes.

This has a control plane implication which is different in case of centralized or distributed, as will now be explained. In a first centralized scenario, a PCE is devoted to path computation, including wavelength assignment and physical validation. It is aware of the security capabilities of each node of the network.

Upon lightpath request of the given bit-rate from source s to destination d, s can exploit the PCE communication protocol (PCEP) for submitting path computation requests to the PCE (i.e., using a PCEP PCReq message), which can carry the security flag information. The flag is set to "1" if a secured channel is requested. Otherwise is set to "0". Other more complex codes can be used. It is assumed that PCE works on the traffic engineering database with updated information about the availability of the security certified resources.

The PCE performs path computation depending on all the conventional parameters like the bit-rate, the admitted modulation formats, the available wavelengths along the path. In addition, if the security flag is set to "1", only the security enabled ROADMs are considered. This could force the PCE to calculate a path which is not the shortest one because the security request has the priority on other requirements like the minimization of the cost or of the length.

If a secured path between s and d is not available, a negative feedback is sent to the owner of the traffic demand by setting the flag to "0" in the PCEP response from the PCE to s. In this case the owner of the traffic demand can choose to request a not secured lightpath and provide the desiderated security at a higher layer (e.g. at packet level) or consider other options. In case that the required traffic demand has some resiliency need, for example requires a 1+1 protection, also the backup path shall be secured.

### Distributed case

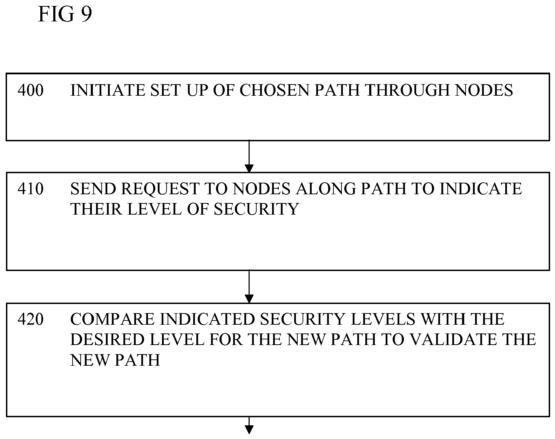

In a distributed version of secure optical channel provisioning, the verification of the security can be left to the path set up, also known as the signaling phase. This occurs after a conventional PCE operation has been carried out without security information. According to the signaling based RSVP-TE a Security Label Set (SLS) can be defined to gather secure wavelength availability information. The end to end availability of a secure channel is assessed during the signalling phase so that the ingress node becomes aware of such availability thanks to the RESV messages. More explanation and examples will be described with reference to figures 9 to 11.

### Fig 9, validating a security level along a path according to an embodiment

Figure 9 shows steps in validating a security level along a path during set up of the path according to an embodiment. This may be carried out after the path has been selected based on the security levels, or it may take place after a path computation which was based on connectivity, with no security level information. Step 400 shows initiating the set up of the chosen path through the nodes. This may be controlled centrally by the NMS or locally by the ingress node for example. At step 410, a request is sent to nodes along the path to indicate their level of security against physical access to the path for eavesdropping or tampering in any way. At step 420 the indicated security levels are compared with the desired level for the new path to validate the new path. This comparison can take place anywhere in principle, though it is usually convenient to carry it out at the ingress node or at each node along the path. If the comparison fails, if the node security level is not high enough then the path set up fails and usually a new path request is sent to the PCE, possibly along with an indication to avoid the node that failed the comparison.

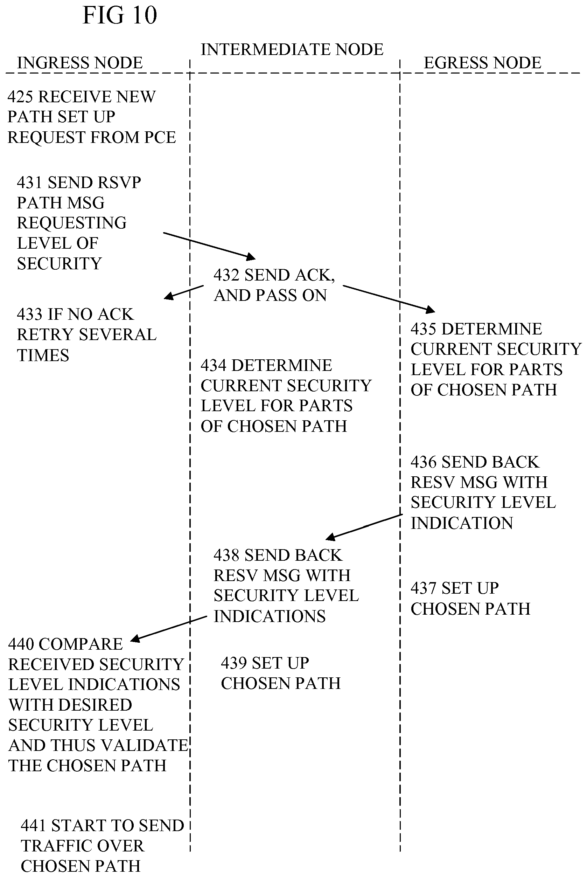

### Fig 10, sequence chart for path set up with comparison at ingress node

Figure 10 shows a sequence chart for a path set up procedure with comparison at an ingress node. Again this may be carried out after the path has been selected based on the security levels, or it may take place after a path computation which was based on connectivity, with no security level information. Time flows down the page. A left column shows actions at an ingress node, a middle column shows actions at one of many intermediate nodes along the path, and a right column shows actions of an egress node.

At step 425 a request for path set up is received from the PCE, usually with a list of nodes of the path. At step 431 the ingress node sends to the next node along the path an RSVP path message requesting a path set up with a report of a level of security of each node. At step 432 the next node sends back an acknowledgement and passes the path message to the next node. At step 433 if no acknowledge is received at the ingress node then a retry is carried out several times. At step 434 the intermediate node checks its security level for the node or for parts of the node on the chosen path. At step 435 the egress node receives the path message and determines its current level of security. The egress node returns a RESV message at step 436 back along the path towards the ingress node, with the security level indication. At step 437 the egress node sets up the chosen path at the egress node. At step 438 the intermediate node receives the RESV message and does the same, passing on the RESV message with a security indication and setting up the path at step 439. The ingress node receives the RESV message at step 440 and compares the desired level of security with the security level indications received from the other nodes of the path. This validates the path, if all the indicated security levels are as high or higher than the desired level. At step 441 the ingress node allows traffic to pass along the path at step 441 if the path is validated.

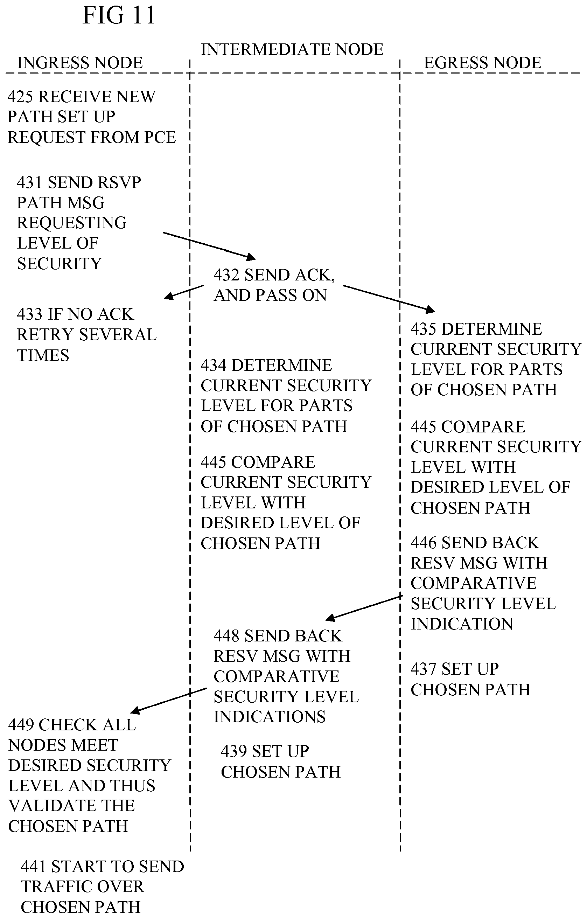

### Fig 11, sequence chart for path set up with comparison at each node

Figure 11 shows a sequence chart similar to that of figure 10 but for a path set up procedure with the comparison made at each node along the path, instead of at the ingress node. Again this may be carried out after the path has been selected based on the security levels, or it may take place after a path computation which was based on connectivity, with no security level information. Time flows down the page. A left column shows actions at an ingress node, a middle column shows actions at one of many intermediate nodes along the path, and a right column shows actions of an egress node.

As in figure 10, at step 425 a request for path set up is received from the PCE, usually with a list of nodes of the path. At step 431 the ingress node sends to the next node along the path an RSVP path message requesting a path set up with a report of a level of security of each node. At step 432 the next node sends back an acknowledgement and passes the path message to the next node. At step 433 if no acknowledge is received at the ingress node then a retry is carried out several times. At step 434 the intermediate node checks its security level for the node or for parts of the node on the chosen path. At the intermediate node the comparison is carried out at step 445 between the current security level and the desired level. At step 435 the egress node receives the path message and determines its current level of security. Here also the comparison is carried out at step 445 between the current security level and the desired level. The egress node then returns a RESV message at step 446 back along the path towards the ingress node, with the security level indication in the form of a result of the comparison, in other words a comparative security level indication, either meeting or failing the comparison. At step 437 the egress node sets up the chosen path at the egress node, as long as the validation was successful. At step 448 the intermediate node receives the RESV message and does the same, passing on the RESV message with its comparative security indication and setting up the path at step 439 if the validation is successful. The ingress node receives the RESV message at step 449 and checks that successful comparative security level indications have been received from the other nodes of the path. This validates the path, if all the comparative security levels are positive. At step 441 the ingress node allows traffic to pass along the path at step 441 if the path is validated.

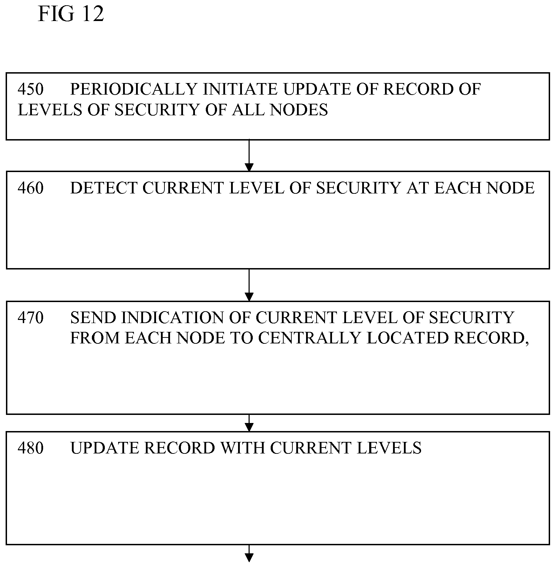

### Fig 12, reporting current level of security to central record

Figure 12 shows steps in a method of updating the record of levels of security according to an embodiment. At step 450 the procedure is started periodically, although it can also be started whenever a security level changes at a node. At step 460 the current level of security is detected at each node. At step 470 an indication of the current level is sent from each node to the centrally located record. This can be communicated using the control plane if the network has a control plane. At step 480 the centrally located record receives the indications and updates the stored values.

### Concluding remarks

If the ROADM has the required security capability, it's able to communicate this information to the network control in any manner, one example is by setting a flag. Note that the security could be provided and monitored or enforced for a part of the node capacity or for a subset of the available directions. In this case multiple parameters would be necessary to communicate for which wavelength and/or for which directions the security is available. To summarise, various different ways of addressing node security against physical access to the paths have been presented. If all the possible security measures (hardware and software) are operating in a node, the node can be considered "fully security certified" and eligible for routing of more sensitive traffic. Note that, if a node does not have all the security measures against physical access in place, it could be considered secure by hosting the node in a secure building. In this case the security flag described in the following could still be set to "1".

In this case instead of a 0/1 flag, one could differentiate the level of security depending on the security countermeasure adopted in a given node (e.g. 0=not secure, 1= SW security control (only WSS blocking functionalities are guaranteed but not the open ports), 2=SW and HW security guard (both WSS and physical access to open ports is controlled), 3=site secured by extra guard measures, etc).

The embodiments described can allow many possible node security weaknesses to be summarised in a common aggregated parameter to be used to certify the security of a path. In some embodiments, by introducing the concept of a security certified optical channel, an additional degree of security can be provided and added to the conventional Layer 2 and Layer 3 security methods. Notably the security certification as described, providing routing with validation of security against physical access to the path, does not interfere or replace security methods provided at the higher layers but can complement them.

The method can exploit various specific node level protection solutions as described, but can also be applied to not-upgraded nodes (e.g. legacy configurations) by ensuring the security at the site level (building access control, etc). Also it is suitable for networks having either centralized or distributed control planes.

Other variations can be envisaged within the claims.

## Claims

1. A method of path computation through nodes of an optical communications network from an ingress node to an egress node, to meet a desired security level against unauthorised physical access to the optical path, the method having the steps of:
receiving a request (200) for selection of a new optical path through the nodes and links of the optical network, using a record (210) of a connectivity of the nodes and links and having indications of a security level associated with at least some parts of the nodes and links, the security level being indicative of security against unauthorised physical access to the optical path,
wherein the security level associated with a node is a current level of security based on a monitoring of the node
to detect an unauthorised physical access, and
selecting the optical path (220) according to at least the indications of security level, and according to the desired security level for the optical path.

2. The method of claim 1 having the step of passing updates (190) of current security levels from the nodes to the record to update the record.

3. The method of any preceding claim, at least one of the links having wavelength division multiplexed channels, and the indications of a security level of at least some parts of the nodes and links comprising an indication of a security level of at least one of the wavelength multiplexed channels, and the method having the step of allocating (230) a wavelength multiplex channel according to the indications.

4. The method of any preceding claim, having the step of sending to a network management system (130) a report of security levels of constituent parts of the chosen path based on the indications, and/or, having the step of sending traffic (441) along the selected optical path.

5. The method of any preceding claim, having the subsequent step of setting up (240, 400, 410, 420, 431 to 440) the chosen path by sending messages to the nodes along the path, and validating (240, 420, 445, 446, 448, 449) the security level at at least some of the nodes along the path.

6. A method of validating a chosen optical path through nodes of an optical communications network from an ingress node to an egress node, to meet a desired security level for the path against unauthorised physical access to the path, having the steps of:
sending a request (410, 431, 432, 435, 436, 438, 440) to each of the nodes of the chosen optical path to indicate a security level for at least part of the path through that node, the security level being indicative of security against unauthorised physical access to the optical path,
wherein the security level associated with a node is a current level of security based on a monitoring of the node to detect an unauthorised physical access, and
comparing (420, 440, 445) the indicated security levels for the nodes with the desired level to validate the chosen path.

7. The method of claim 6 having the step of passing the indicated security levels to the ingress node, and carrying out the comparing (440) at the ingress node,or, having the step of carrying out the comparing step at the respective node (445, and sending (446, 448) a result of the comparison to the ingress node.

8. The method of any of claims 6 to 7, the request comprising an RSVP path message, and having the step of sending the indication from each node to the ingress node using an RESV message.

9. A method of reporting a current security level at an optical node to a record of a connectivity of nodes and links of an optical communications network, the record also having indications of security levels associated with at least some parts of the nodes and links, the method having the steps of:
detecting at the optical node (460) a current level of security against unauthorised physical access to parts of a path through the node, the current level of security based on a monitoring of the node to detect an unauthorised physical access, and
sending an indication (470) of the detected current level of security to the record, for updating (480) the record with the current security level.

10. The method of any preceding claim, wherein one of the levels of security comprises whether the respective node has a guard device (48) operating to prevent unauthorised reconfiguration of an output port of the node to leak an optical signal which is broadcast by the node to all output ports and normally blocked at all but a desired one of the output ports, and/or, wherein the network is an optical network, and one of the levels of security comprises whether the respective node has a physical block (50) operating to prevent unauthorised access to an optical path of a spare output port (25) to which an optical signal is normally broadcast.

11. The method of any of the preceding claims, the network having at least one link having wavelength division multiplexed channels, and the indication of a security level comprising an indication of a security level of at least one of the wavelength multiplexed channels.

12. Apparatus (10, 20) for an optical communications network, configured to carry out the method of any of claims 1 to 5, or claim 9 or claims 10 or 11 when dependent on any of claims 1 to 5 and 9.

13. A node (10, 20) of an optical communications network configured to cooperate with a remote path computation element to validate a chosen optical path through nodes of the communications network from an ingress node to an egress node, to meet a desired security level for the path against unauthorised physical access to the path, the node having:
a security level monitoring part (30, 31) configured to monitor the node to detect an unauthorised physical access indicating a current level of security against unauthorised physical access to parts of the chosen path through the node,
an interface part (32) configured to receive a request from the path computation element for an indication of the current security level for at least part of the chosen path through that node, and configured to send the indication to the path computation element in response to the request.

14. The node of claim 13, having a comparator (70) configured to compare the current level of security with the desired level in response to the request, and the interface part being configured to send the result of the comparison as the indication of the current level of security for this part of the chosen path, and/or, the request comprising an RSVP path message, and node being configured to send the indication by sending an RESV message to the ingress node.

15. A signal having an indication of a security level of an optical path from an ingress node to an egress node in an optical communications network having nodes and links, the security level associated with a node and being indicative of security against unauthorised physical access to at least a part of the optical path, to eavesdrop on, or tamper with the optical path, and based on a monitoring of the node to detect an unauthorised physical access.

## Patentansprüche

1. Verfahren zur Pfadberechnung durch Knoten eines optischen Kommunikationsnetzwerks von einem Eingangsknoten zu einem Ausgangsknoten, um einer gewünschten Sicherheitsebene gegen nicht autorisierten physischen Zugriff auf den optischen Pfad zu entsprechen, wobei das Verfahren die folgenden Schritte aufweist:
Empfangen einer Aufforderung (200) zur Auswahl eines neuen optischen Pfads durch die Knoten und Verbindungen des optischen Netzwerks, die ein Protokoll (210) einer Konnektivität der Knoten und Verbindungen verwendet und die Hinweise auf eine Sicherheitsebene aufweist, die mindestens einigen Teilen der Knoten und Verbindungen zugeordnet sind, wobei die Sicherheitsebene auf eine Sicherheit gegen nicht autorisierten physischen Zugriff auf den optischen Pfad hinweist,
wobei die Sicherheitsebene, die einem Knoten zugeordnet ist, eine aktuelle Sicherheitsebene auf Grundlage eines Überwachens des Knotens zum Erfassen eines nicht autorisierten physischen Zugriffs ist, und
Auswählen des optischen Pfads (220) gemäß mindestens den Hinweisen auf die Sicherheitsebene und gemäß der gewünschten Sicherheitsebene für den optischen Pfad.

2. Verfahren nach Anspruch 1, das den Schritt des Weiterleitens von Aktualisierungen (190) von aktuellen Sicherheitsebenen von den Knoten an das Protokoll zum Aktualisieren des Protokolls aufweist.

3. Verfahren nach einem der vorhergehenden Ansprüche, wobei mindestens eine der Verbindungen wellenlängengemultiplexte Kanäle aufweist und wobei die Hinweise auf eine Sicherheitsebene von mindestens einigen Teilen der Knoten und Verbindungen einen Hinweis auf eine Sicherheitsebene von mindestens einem der wellenlängengemultiplexten Kanäle umfassen, und wobei das Verfahren den Schritt des Zuweisens (230) eines wellenlängengemultiplexten Kanals gemäß den Hinweisen aufweist.

4. Verfahren nach einem der vorhergehenden Ansprüche, das den Schritt des Sendens eines Berichts über Sicherheitsebenen von Bestandteilen des auf Grundlage der Hinweise ausgesuchten Pfads an ein Netzwerkverwaltungssystem (130) aufweist und/oder den Schritt des Sendens von Verkehr (441) entlang des ausgewählten optischen Pfads aufweist.

5. Verfahren nach einem der vorhergehenden Ansprüche, das den nachfolgenden Schritt des Einrichtens (240, 400, 410, 420, 431, bis 440) des ausgesuchten Pfads durch Senden von Nachrichten an die Knoten entlang des Pfads und des Validierens (240, 420, 445, 446, 448, 449) der Sicherheitsebene bei mindestens einigen der Knoten entlang des Pfads aufweist.

6. Verfahren zum Validieren eines ausgesuchten optischen Pfads durch Knoten eines optischen Kommunikationsnetzwerks von einem Eingangsknoten zu einem Ausgangsknoten, um einer gewünschten Sicherheitsebene für den Pfad gegen nicht autorisierten physischen Zugriff auf den Pfad zu entsprechen, das die folgenden Schritte aufweist:
Senden einer Aufforderung (410, 431, 432, 435, 436, 438, 440) an jeden der Knoten des ausgesuchten optischen Pfads, um auf eine Sicherheitsebene für mindestens einen Teil des Pfads durch die Knoten hinzuweisen, wobei die Sicherheitsebene auf eine Sicherheit gegen nicht autorisierten physischen Zugriff auf den optischen Pfad hinweist,
wobei die Sicherheitsebene, die einem Knoten zugeordnet ist, eine aktuelle Sicherheitsebene auf Grundlage eines Überwachens des Knotens zum Erfassen eines nicht autorisierten physischen Zugriffs ist, und
Vergleichen (420, 440, 445) der hingewiesenen Sicherheitsebenen für die Knoten mit der gewünschten Ebene, um den ausgesuchten Pfad zu validieren.

7. Verfahren nach Anspruch 6, das den Schritt des Weiterleitens der hingewiesenen Sicherheitsebenen zu dem Eingangsknoten und das Ausführen des Vergleichens (440) an dem Eingangsknoten aufweist oder das den Schritt des Ausführens des Vergleichsschritts an dem jeweiligen Knoten (445) und des Sendens (446, 448) eines Ergebnisses des Vergleichs an den Eingangsknoten aufweist.

8. Verfahren nach einem der Ansprüche 6 oder 7, wobei die Aufforderung eine RSVP-Pfadmeldung umfasst, und das den Schritt des Sendens des Hinweises von jedem Knoten zu dem Eingangsknoten unter Verwendung einer RESV-Nachricht aufweist.

9. Verfahren zum Berichten einer aktuellen Sicherheitsebene an einem optischen Knoten an ein Protokoll einer Konnektivität von Knoten und Verbindungen eines optischen Kommunikationsnetzwerks, wobei das Protokoll ebenfalls Hinweise auf Sicherheitsebenen, die mindestens einigen Teilen der Knoten und Verbindungen zugeordnet sind, aufweist, wobei das Verfahren folgende Schritte aufweist:
Erfassen einer aktuellen Sicherheitsebene gegen nicht autorisierten physischen Zugriff an dem optischen Knoten (460) auf Teile eines Pfads durch den Knoten, wobei die aktuelle Sicherheitsebene auf einem Überwachen des Knotens zum Erfassen eines nicht autorisierten physischen Zugriffs beruht, und Senden eines Hinweises (470) auf die erfasste aktuelle Sicherheitsebene an das Protokoll zum Aktualisieren (480) des Protokolls mit der aktuellen Sicherheitsebene.

10. Verfahren nach einem der vorhergehenden Ansprüche, wobei eine der Sicherheitsebenen umfasst, ob der jeweilige Knoten eine Schutzvorrichtung (48) aufweist, die betrieben wird, um eine nicht autorisierte Neukonfiguration eines Ausgabeanschlusses des Knotens zum Austreten eines optischen Signals, das durch den Knoten an alle Ausgabeanschlusse übertragen wird und normalerweise an allen außer einem gewünschten der Ausgabeanschlüsse blockiert wird, zu verhindern, und/oder wobei das Netzwerk ein optisches Netzwerk ist, und eine der Sicherheitsebenen umfasst, ob der jeweilige Knoten eine physische Blockierung (50) aufweist, die betrieben wird, um einen nicht autorisierten Zugriff auf einen optischen Pfad eines freien Ausgabeanschlusses (25) zu verhindern, an den ein optisches Signal normalerweise übertragen wird.

11. Verfahren nach einem der vorhergehenden Anschlüsse, wobei das Netzwerk mindestens eine Verbindung aufweist, die wellenlängengemultiplexte Kanäle aufweist, und wobei der Hinweis auf eine Sicherheitsebene einen Hinweis auf eine Sicherheitsebene von mindestens einem der wellenlängengemultiplexten Kanäle umfasst.

12. Vorrichtung (10, 20) für ein optisches Kommunikationsnetzwerk, die dazu konfiguriert ist, das Verfahren nach einem der Ansprüche 1 bis 5 oder Anspruch 9 oder der Ansprüche 10 oder 11, wenn diese von einem der Ansprüche 1 bis 5 und 9 abhängen, auszuführen.

13. Knoten (10, 20) eines optischen Kommunikationsnetzwerks, der dazu konfiguriert ist, mit einem externen Pfadberechnungselement zusammenzuarbeiten, um einen ausgesuchten optischen Pfad durch Knoten des Kommunikationsnetzwerks von einem Eingangsknoten zu einem Ausgangsknoten zu validieren, um einer gewünschten Sicherheitsebene für den Pfad gegen nicht autorisierten physischen Zugriff auf den Pfad zu entsprechen, wobei der Knoten Folgendes aufweist:
einen Teil (30, 31) zum Überwachen der Sicherheitsebene, der dazu konfiguriert ist, den Knoten zu überwachen, um einen nicht autorisierten physischen Zugriff zu erfassen, und der auf eine aktuelle Sicherheitsebene gegen nicht autorisierten physischen Zugriff auf Teile des ausgesuchten Pfads durch den Knoten hinweist,
einen Schnittstellenteil (32), der dazu konfiguriert ist, eine Aufforderung von dem Pfadberechnungselement zu einem Hinweis auf die aktuelle Sicherheitsebene für mindestens einen Teil des ausgesuchten Pfads durch den Knoten zu empfangen, und der dazu konfiguriert ist, den Hinweis als Reaktion auf die Aufforderung an das Pfadberechnungselement zu senden.

14. Knoten nach Anspruch 13, der einen Komparator (70) aufweist, der dazu konfiguriert ist, als Reaktion auf die Aufforderung die aktuelle Sicherheitsebene mit der gewünschten Sicherheitsebene zu vergleichen, und wobei der Schnittstellenteil dazu konfiguriert ist, das Ergebnis des Vergleichs als den Hinweis auf die aktuelle Sicherheitsebene für diesen Teil des ausgesuchten Pfads und/oder die Aufforderung, die eine RSVP-Nachricht umfasst, zu senden, und wobei der Knoten dazu konfiguriert ist, den Hinweis durch Senden einer RESV-Nachricht an den Eingangsknoten zu senden.

15. Signal, das einen Hinweis auf eine Sicherheitsebene eines optischen Pfads von einem Eingangsknoten zu einem Ausgangsknoten in einem optischen Kommunikationsnetzwerk, das Knoten und Verbindungen aufweist, aufweist, wobei die Sicherheitsebene, die einem Knoten zugeordnet ist und auf eine Sicherheit gegen nicht autorisierten physischen Zugriff auf mindestens einen Teil des optischen Pfads hinweist, um den optischen Pfad abzuhören oder zu manipulieren, und auf einem Überwachen des Knotens zum Erfassen eines nicht autorisierten physischen Zugriffs beruht.

## Revendications

1. Procédé de calcul de chemin à travers des noeuds d'un réseau de communications optique d'un noeud d'entrée à un noeud de sortie, afin de respecter un niveau de sécurité souhaité contre un accès physique non autorisé au chemin optique, le procédé comportant les étapes :
de réception d'une demande (200) pour la sélection d'un nouveau chemin optique à travers les noeuds et les liaisons du réseau optique, à l'aide d'un enregistrement (210) d'une connectivité des noeuds et des liaisons et ayant des indications d'un niveau de sécurité associé à au moins certaines parties des noeuds et des liaisons, le niveau de sécurité étant indicatif de la sécurité contre un accès physique non autorisé au chemin optique,
dans lequel le niveau de sécurité associé à un noeud est un niveau de sécurité actuel basé sur une surveillance du noeud pour détecter un accès physique non autorisé, et
la sélection du chemin optique (220) en fonction au moins des indications du niveau de sécurité, et en fonction du niveau de sécurité souhaité pour le chemin optique.

2. Procédé selon la revendication 1, comportant l'étape de transmission des mises à jour (190) des niveaux de sécurité actuels des noeuds à l'enregistrement pour mettre à jour l'enregistrement.

3. Procédé selon une quelconque revendication précédente, au moins l'une des liaisons comportant des canaux multiplexés par division en longueur d'onde, et les indications d'un niveau de sécurité d'au moins certaines parties des noeuds et des liaisons comprenant une indication d'un niveau de sécurité d'au moins l'un des canaux multiplexés en longueur d'onde, et le procédé comportant l'étape d'attribution (230) d'un canal multiplexé en longueur d'onde en fonction des indications.

4. Procédé selon une quelconque revendication précédente, comportant l'étape d'envoi, à un système de gestion de réseau (130), d'un rapport des niveaux de sécurité des parties constitutives du chemin choisi sur la base des indications, et/ou comportant l'étape d'envoi du trafic (441) le long du chemin optique sélectionné.

5. Procédé selon une quelconque revendication précédente, comportant l'étape suivante d'établissement (240, 400, 410, 420, 431 à 440) du chemin choisi par l'envoi de messages aux noeuds le long du chemin, et la validation (240, 420, 445, 446, 448, 449) du niveau de sécurité au niveau d'au moins certains des noeuds situés le long du chemin.

6. Procédé de validation d'un chemin optique choisi à travers des noeuds d'un réseau de communications optique d'un noeud d'entrée à un noeud de sortie, afin de respecter un niveau de sécurité souhaité pour le chemin contre un accès physique non autorisé au chemin, comportant les étapes :
d'envoi d'une demande (410, 431, 432, 435, 436, 438, 440) à chacun des noeuds du chemin optique choisi pour indiquer un niveau de sécurité pour au moins une partie du chemin à travers ce noeud, le niveau de sécurité étant indicatif de la sécurité contre un accès physique non autorisé au chemin optique,
dans lequel le niveau de sécurité associé à un noeud est un niveau de sécurité actuel basé sur une surveillance du noeud pour détecter un accès physique non autorisé, et
de comparaison (420, 440, 445) des niveaux de sécurité indiqués pour les noeuds avec le niveau souhaité pour valider le chemin choisi.

7. Procédé selon la revendication 6, comportant l'étape de transmission des niveaux de sécurité indiqués au noeud d'entrée, et de réalisation de la comparaison (440) au niveau du noeud d'entrée, ou comportant l'étape de réalisation de l'étape de comparaison au niveau du noeud respectif (445), et d'envoi (446, 448) du résultat de la comparaison au noeud d'entrée.

8. Procédé selon l'une quelconque des revendications 6 à 7, la demande comprenant un message de chemin RSVP, et comportant l'étape d'envoi des indications de chaque noeud au noeud d'entrée à l'aide d'un message RESV.

9. Procédé de signalement d'un niveau de sécurité actuel au niveau d'un noeud optique à un enregistrement d'une connectivité de noeuds et de liaisons d'un réseau de communications optique, l'enregistrement comportant également des indications de niveaux de sécurité associés à au moins certaines parties des noeuds et des liaisons, le procédé comportant les étapes :
de détection, au niveau du noeud optique (460), d'un niveau de sécurité actuel contre un accès physique non autorisé à des parties d'un chemin à travers le noeud, le niveau de sécurité actuel étant basé sur une surveillance du noeud pour détecter un accès physique non autorisé, et
d'envoi, à l'enregistrement, d'une indication (470) du niveau de sécurité actuel détecté, pour la mise à jour (480) de l'enregistrement avec le niveau de sécurité actuel.

10. Procédé selon une quelconque revendication précédente, dans lequel l'un des niveaux de sécurité comprend le fait d'indiquer si le noeud respectif comporte un dispositif de protection (48) fonctionnant pour empêcher une reconfiguration non autorisée d'un port de sortie du noeud afin de laisser fuir un signal optique qui est diffusé par le noeud sur tous les ports de sortie et normalement bloqué au niveau de tous les ports de sortie sauf un souhaité, et/ou dans lequel le réseau est un réseau optique, et l'un des niveaux de sécurité comprend le fait d'indiquer si le noeud respectif comporte un bloc physique (50) fonctionnant pour empêcher un accès non autorisé à un chemin optique d'un port de sortie disponible (25) vers lequel un signal optique est normalement diffusé.

11. Procédé selon l'une quelconque des revendications précédentes, le réseau comportant au moins une liaison comportant des canaux multiplexés par division en longueur d'onde, et l'indication d'un niveau de sécurité comprenant une indication d'un niveau de sécurité d'au moins l'un des canaux multiplexés en longueur d'onde.

12. Appareil (10, 20) pour un réseau de communications optique, configuré pour mettre en oeuvre le procédé selon l'une quelconque des revendications 1 à 5, ou la revendication 9 ou les revendications 10 ou 11 lorsqu'elles dépendent de l'une quelconque des revendications 1 à 5 et 9.

13. Noeud (10, 20) d'un réseau de communications optique configuré pour coopérer avec un élément de calcul de chemin distant pour valider un chemin optique choisi à travers des noeuds du réseau de communications, d'un noeud d'entrée à un noeud de sortie, afin de respecter un niveau de sécurité souhaité pour le chemin contre un accès physique non autorisé au chemin, le noeud comportant :
une partie de surveillance de niveau de sécurité (30, 31) configurée pour surveiller le noeud afin de détecter un accès physique non autorisé indiquant un niveau actuel de sécurité contre un accès physique non autorisé à des parties du chemin choisi à travers le noeud,
une partie interface (32) configurée pour recevoir une demande, en provenance de l'élément de calcul de chemin, d'une indication du niveau de sécurité actuel pour au moins une partie du chemin choisi à travers ce noeud, et configurée pour envoyer l'indication à l'élément de calcul de chemin en réponse à la demande.

14. Noeud selon la revendication 13, comportant un comparateur (70) configuré pour comparer le niveau actuel de sécurité avec le niveau souhaité en réponse à la demande, et la partie interface étant configurée pour envoyer le résultat de la comparaison en tant qu'indication du niveau actuel de sécurité pour cette partie du chemin choisi et/ou, la demande comprenant un message de chemin RSVP, et le noeud étant configuré pour envoyer l'indication par l'envoi d'un message RESV au noeud d'entrée.

15. Signal comportant une indication d'un niveau de sécurité d'un chemin optique d'un noeud d'entrée à un noeud de sortie dans un réseau de communications optique comportant des noeuds et des liaisons, le niveau de sécurité étant associé à un noeud et étant indicatif de la sécurité contre un accès physique non autorisé sur au moins une partie du chemin optique, pour espionner ou altérer le chemin optique, et étant basé sur une surveillance du noeud pour détecter un accès physique non autorisé.
